# EUROPEAN PATENT SPECIFICATION

(11) **EP 2 933 579 B1**
(45) Date of publication and mention of the grant of the patent: **03.05.2017**
(21) Application number: 15160775.1
(22) Date of filing: 25.03.2015
(51) Int. Cl.: F24H 4/04, F24H 9/20, F24D 19/00

(54) **HEAT PUMP WATER HEATER**
WÄRMEPUMPEN-WASSERERHITZER
CHAUFFE-EAU À POMPE DE CHALEUR

(30) Priority: 18.04.2014 JP 2014086017
(43) Date of publication of application: 21.10.2015
(73) Proprietor: Panasonic Intellectual Property Management Co., Ltd., Osaka-shi, Osaka 540-6207 (JP)
(72) Inventor: Umeda, Taichi, Osaka, 540-6207 (JP); Hamada, Masayuki, Osaka, 540-6207 (JP); Ohno, Youhei, Osaka, 540-6207 (JP)
(74) Representative: Eisenführ Speiser

(56) References cited:
- EP-A2- 2 420 767
- JP-A- 2003 214 700
- JP-A- 2013 224 809
- JP-A- 2014 001 883

## Description

### [TECHNICAL FIELD]

The present invention relates to a heat pump water heater.

### [BACKGROUND TECHNIQUE]

As a conventional heat pump water heater of this kind, there is one including a hot water tank and a heat pump device for heating water in the hot water tank (see patent document 1 for example) . In this heat pump water heater, the heat pump device is provided in a heating circuit for sending hot water which flows out from a lower portion of the hot water tank to an upper portion of the hot water tank. The heating circuit is also provided with a pump for sending water. The heat pump water heater includes a bypass path which branches off from the heating circuit located downstream of the heat pump device and which is connected to the lower portion of the hot water tank.

Under a condition that outside air temperature is low and there is concern that water remaining in the heating circuit freezes, an operation to flow water to the heating circuit by a pump and to return the water to the lower portion of the hot water tank through by bypass path is carried out. According to this, water remaining in the heating circuit is prevented from freezing while restraining temperature stratification of hot water in the hot water tank from being destroyed. Patent document 2 discloses a heat pump circuit comprising a hot water tank and an auxiliary heat source to prevent water inside the heat pump circuit from freezing which is controlled by a control unit wherein a temperature detection unit is provided to decrease a time delay of operation of the auxiliary heat source.

Patent document 3 discloses a heat pump circuit comprising a hot water tank and a controller operable to reverse the water flow within the heat pump circuit to prevent water from freezing inside a heat pump circuit by circulating the water from a lower portion of the heat tank towards the heat pump in normal operation and the water from an upper portion of the heat tank towards the heat pump during a reversed operation at cold temperatures.

### [PRIOR ART DOCUMENT]

### [PATENT DOCUMENT]

[PATENT DOCUMENT 1] Japanese Patent Application Laid-open No. 2003-214700
[PATENT DOCUMENT 2] Japanese Patent Application Laid-open No. 2013-224809
[PATENT DOCUMENT 3] Japanese Patent Application Laid-open No. 2014-001883

### [SUMMARY OF THE INVENTION]

### [PROBLEM TO BE SOLVED BY THE INVENTION]

In the heat pump water heater having the bypass path of the conventional structure, in an operation to prevent the heating circuit from freezing, it is possible to return low temperature water to the lower portion of the hot water tank through the bypass path. When the heat pump water heater does not have the bypass path on the other hand, if the operation to prevent freezing is carried out, low temperature water flows in from a location above the hot water tank. Hence, if hot water is supplied using hot water in the hot water tank after the operation to prevent freezing is carried out, hot water having temperature different from that desired by a user is supplied to a hot water supply terminal and therefore, there is a problem that user's comfort is deteriorated.

The present invention has been accomplished to solve the conventional problem, and it is an object of the invention to provide a heat pump water heater capable of highly maintaining user' s comfort even if an operation to prevent a heating circuit from freezing is carried out.

### [MEANS FOR SOLVING THE PROBLEM]

To solve the conventional problem, the present invention provides a heat pump water heater comprising: a hot water tank in which hot water is stored; hot water tank temperature detecting means for detecting temperature of the hot water in the hot water tank; a heat pump device for heating the hot water; a heating circuit in which the heat pump device is placed and which returns the hot water sent from a lower portion of the hot water tank to an upper portion of the hot water tank; a pump provided in the heating circuit between the lower portion of the hot water tank and the heat pump device; operating means for setting temperature of the hot water heated by the heat pump device between predetermined lower limit temperature and predetermined upper limit temperature; and a control device for executing at least a hot water storing operation mode in which the hot water is heated by the heat pump device to set temperature which is set by the operating means, and a freezing-preventing operation mode in which the hot water is made to flow to the heating circuit under a predetermined freezing-preventing condition, wherein the control device includes freezing-preventing operation start-determining means for determining a starting condition of the freezing-preventing operation mode, operation state-determining means for determining whether the operating means is in an ON state or an OFF state, and heating temperature-determining means for determining heating temperature of the hot water in the freezing-preventing operation mode, and the heating temperature determined by the heating temperature-determining means is changed based on determination of the operation state-determining means.

According to this, it is possible to determine a state where a user is using the water heater or a state where the user has a will to use the water heater based on whether the operating means is ON or OFF, and when the freezing-preventing operation mode is carried out, temperature of hot water flowing to the upper portion of the hot water tank is changed. Therefore, it is possible to highly maintain comfort of the user.

### [EFFECT OF THE INVENTION]

The present invention can provide a heat pump water heater capable of highly maintaining comfort of a user.

### [BRIEF DESCRIPTION OF THE DRAWINGS]

Fig. 1 is a schematic block diagram of a heat pump water heater according to an embodiment of the present invention;
Fig. 2 is a graph showing a temperature distribution in a hot water tank of the heat pump water heater;
Fig. 3 is a control flowchart of a freezing-preventing operation mode of the heat pump water heater;
Fig. 4 is a graph showing a temperature distribution in the hot water tank when the heat pump water heater carries out the freezing-preventing operation mode;
Fig. 5 is another control flowchart of the freezing-preventing operation mode of the heat pump water heater; and
Fig. 6 is another control flowchart of the freezing-preventing operation mode of the heat pump water heater.

### [MODE FOR CARRYING OUT THE INVENTION]

A first aspect of the present invention provides a heat pump water heater comprising: a hot water tank in which hot water is stored; hot water tank temperature detecting means for detecting temperature of the hot water in the hot water tank; a heat pump device for heating the hot water; a heating circuit in which the heat pump device is placed and which returns the hot water sent from a lower portion of the hot water tank to an upper portion of the hot water tank; a pump provided in the heating circuit between the lower portion of the hot water tank and the heat pump device; operating means for setting temperature of the hot water heated by the heat pump device between predetermined lower limit temperature and predetermined upper limit temperature; and a control device for executing at least a hot water storing operation mode in which the hot water is heated by the heat pump device to set temperature which is set by the operating means, and a freezing-preventing operation mode in which the hot water is made to flow to the heating circuit under a predetermined freezing-preventing condition, wherein the control device includes freezing-preventing operation start-determining means for determining a starting condition of the freezing-preventing operation mode, operation state-determining means for determining whether the operating means is in an ON state or an OFF state, and heating temperature-determining means for determining heating temperature of the hot water in the freezing-preventing operation mode, and the heating temperature determined by the heating temperature-determining means is changed based on determination of the operation state-determining means.

According to this, it is possible to determine a state where a user is using the water heater or a state where the user has a will to use the water heater based on whether the operating means is ON or OFF, and when the freezing-preventing operation mode is carried out, temperature of hot water flowing to the upper portion of the hot water tank is changed. Therefore, it is possible to highly maintain comfort of the user. That is, in the heat pump water heater which sets, by the operating means, temperature of hot water heated by the heat pump device at the time of the hot water storing operation mode, it is possible to highly maintain comfort of a user.

It is possible to determine the ON state of the operating means based on whether a power supply of the operating means is ON. For example, when the operating means is provided with a display unit for displaying set temperature or the like, if the set temperature or the like is displayed on the display unit, the operating means is in the ON state, and if the set temperature or the like is not displayed on the display unit, the operating means is in the OFF state. Further, it is possible to determine whether the operating means is in the ON state or the OFF state based on the presence or absence of light of a backlight of the display unit. In this case, if the backlight lights, the operating means is in the ON state, and if the backlight does not light, the operating means is in the OFF state.

According to a second aspect of the invention, especially in the first aspect, when the operation state-determining means determines that the operating means is in the ON state, the heating temperature determined by the heating temperature-determining means is set to the set temperature which is set by the operating means.

According to this, when the operating means is in the ON state and the freezing-preventing operation mode is carried out in a state where a user is using the heat pump water heater and in a state where the user has a will to use the heat pump water heater, hot water is heated by the heat pump device to set temperature and temperature of the hot water in the hot water tank can be maintained. Hence, it is possible to avoid a case where hot water having temperature which is not intended by a user is supplied to the hot water supply terminal, and it is possible to highly maintain comfort of the user.

In a thermal stratification type heat pump water heater in which hot water in a lower portion of the hot water tank is heated and the hot water is returned to the upper portion of the hot water tank, it is possible to maintain a temperature distribution of hot water in the hot water tank. Hence, it is possible to maintain, at low temperature, hot water supplied from the lower portion of the hot water tank, and it is possible to maintain, at low temperature, hot water supplied to the heat pump device. As a result, it is possible to highly maintain the heating efficiency of hot water carried out by the heat pump device, and to enhance energy saving performance.

According to a third aspect of the invention, especially in the first or second aspect, the heating temperature determined by the heating temperature-determining means is set equal to or higher than the lower limit temperature which is set by the operating means.

According to this, during execution of the freezing-preventing operation mode, temperature of hot water flowing into the hot water tank from the heating circuit becomes equal to or higher than lower limit temperature. Therefore, even if hot water is supplied during or immediately after the execution of the freezing-preventing operation mode, hot water having temperature or higher that can be set by a user is supplied to the hot water supply terminal. Hence, it is possible to highly maintain comfort of the user.

It is preferable that heating temperature is changed in a range between not lower than lower limit temperature of target temperature which is set by the operating means and not higher than upper limit temperature.

According to a fourth aspect of the invention, especially in the first aspect, when the operation state-determining means determines that the operating means is in the OFF state, the heating temperature determined by the heating temperature-determining means is set to the hot water storing temperature which is detected by the hot water tank temperature detecting means.

According to this, even when the operating means is in the OFF state and a user does not supply hot water, hot water is heated by the heat pump device in the freezing-preventing operation mode, and hot water having temperature equal to that of hot water in the hot water tank is produced. Therefore, even if hot water is supplied during or immediately after the execution of the freezing-preventing operation mode, it is possible to avoid a case where hot water having temperature which is not intended by a user is supplied to the hot water supply terminal.

Temperature of hot water in the hot water tank in this case can be detected by the hot water tank temperature detecting means. Further, as temperature of hot water in the hot water tank in this case, it is preferable to detect the highest value of temperature of hot water in the hot water tank.

According to a fifth aspect of the invention, especially in the first or fourth aspect, when the operation state-determining means determines that the operating means is in the OFF state, the heating temperature determined by the heating temperature-determining means is set to the lower limit temperature which is set by the operating means.

According to this, when the operating means is in the OFF state and a user does not have a will to supply hot water, heating temperature is set to the lower limit temperature and the freezing-preventing operation mode having small consumed power of the heat pump device can be executed. Therefore, it is possible to provide a heat pump water heater having excellent energy saving performance while highly maintaining comfort of a user.

An embodiment of the present invention will be described below with reference to the drawings. The invention is not limited to the embodiment.

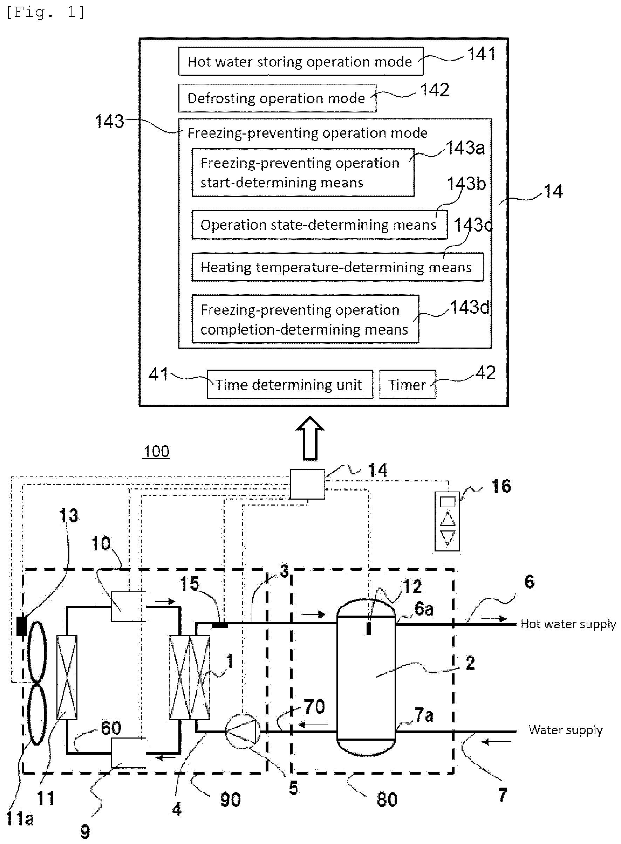

Fig. 1 is a schematic block diagram of a heat pump water heater 100 according to the embodiment. As shown in Fig. 1, the heat pump water heater 100 includes a hot water tank unit 80 and a heat pump device 90.

A hot water tank 2 for storing hot water is placed in the hot water tank unit 80. A hot water supply port 6a is provided in an upper portion of the hot water tank 2, and a water supply port 7a is provided in a lower portion of the hot water tank 2. A water supply pipe 7 through which water is supplied from a water pipe is connected to the water supply port 7a. A hot water supply pipe 6 through which hot water in the hot water tank 2 is supplied to a hot water supply terminal is connected to the hot water supply port 6a.

If hot water in the hot water tank 2 is used for hot water supply and the hot water is reduced, water is automatically supplied from the water supply pipe 7 to the hot water tank 2. The water supply pipe 7 has a pressure reducing valve (not shown) provided inside or outside the hot water tank unit 80. If hot water in the hot water tank 2 is reduced and internal pressure of the hot water tank 2 is lowered by the pressure reducing valve, water is supplied to the hot water tank 2 through the water supply pipe 7.

The hot water tank 2 is provided with a first temperature sensor (hot water tank temperature detecting means) 12 for detecting temperature (hot water storing temperature) of hot water in the hot water tank 2. In this embodiment, the first temperature sensor 12 is provided at a low position separated away from the hot water supply port 6a by a predetermined distance. In this embodiment, the one first temperature sensor 12 is provided at a position higher than a center of the hot water tank 2 in its height direction. A plurality of temperature sensors 12, may be placed in the height direction of the hot water tank 2 to configure hot water tank temperature detecting means 12.

A going pipe 4 is connected to a lower portion of the hot water tank 2. Hot water in the lower portion of the hot water tank 2 flows, through the going pipe 4, to a water-refrigerant heat exchanger 1 provided in the heat pump device 90. The going pipe 4 is provided with a pump 5 for sending hot water in the lower portion of the hot water tank 2 to the heat pump device 90. A returning pipe 3 through which hot water flows from the water-refrigerant heat exchanger 1 to the hot water tank 2 is connected to an upper portion of the hot water tank 2. The lower portion of the hot water tank 2, the going pipe 4, the water-refrigerant heat exchanger 1, the returning pipe 3 and an upper portion of the hot water tank 2 are connected to one another in this order, thereby configuring a heating circuit 70.

The water-refrigerant heat exchanger 1 is a heat exchanger in which hot water and refrigerant exchange heat with each other. A water flow path (not shown) through which hot water flows and a refrigerant flow path (not shown) through which refrigerant circulating through a later-described refrigerant circuit 60 are provided in the water-refrigerant heat exchanger 1. Refrigerant radiates heat to hot water in the water-refrigerant heat exchanger 1, thereby producing high temperature hot water.

The heat pump device 90 includes the refrigerant circuit 60. The refrigerant circuit 60 is formed by annularly connecting, to one another through refrigerant pipes, a compressor 10 for compressing refrigerant, the water-refrigerant heat exchanger 1, an expansion mechanism 9 for decompressing refrigerant, and an evaporator 11 for evaporating refrigerant. As the expansion mechanism 9, it is possible to use an electromagnetic expansion valve and a capillary tube whose opening degree can be changed. The evaporator 11 is an air heat exchanger for exchanging heat between refrigerant and air sent by a blast fan 11a provided in the vicinity of the evaporator 11. As refrigerant which circulates through the refrigerant circuit 60, it is possible to use CFC-based refrigerant such as R410A, R134a and R32, natural refrigerant such as CO₂ and other refrigerant.

A second temperature sensor (outside air temperature detecting means) 13 for detecting outside air temperature is provided in the heat pump device 90 at a location in the vicinity of the evaporator 11 and the blast fan 11a. Further, a third temperature sensor (outlet temperature detecting means) 15 for detecting temperature of hot water flowing through the returning pipe 3 is provided in the heat pump device 90.

Output signals of temperature detected by the temperature sensors 12, 13 and 15 are sent to a control device 14. A plurality of operation modes are executed by the control device 14. The plurality of operation modes include a hot water storing operation mode 141, a defrosting operation mode 142 and a freezing-preventing operation mode 143. In the hot water storing operation mode 141, water in the lower portion of the hot water tank 2 is heated by the water-refrigerant heat exchanger 1, and the heated water is returned to the upper portion of the hot water tank 2. In the defrosting operation mode 142, when frost adheres to the evaporator 11, the frost is melted and removed. In the freezing-preventing operation mode 143, water staying in the heating circuit 70 is prevented from freezing.

The control device 14 has the hot water storing operation mode 141, the defrosting operation mode 142 and the freezing-preventing operation mode 143, and includes means for executing these modes.

As means for executing the freezing-preventing operation mode 143, the control device 14 includes freezing-preventing operation start-determining means 143a for determining a starting condition of the freezing-preventing operation mode 143, operation state-determining means 143b for determining whether the operating means 16 is in the ON state or in the OFF state, heating temperature-determining means 143c for determining heating temperature of hot water in the freezing-preventing operation mode 143, and freezing-preventing operation completion-determining means 143d for determining a completion condition of the freezing-preventing operation mode 143.

The control device 14 includes a time determining unit 41 for determining current time, and a timer 42 capable of measuring time such as operation time of the operation mode and elapsed time from the last operation mode.

The control device 14 executes and stops the plurality of operation modes based on set temperature which is set by the operating means 16 and based on temperature detected by the temperature sensors 12, 13 and 15. The control device 14 controls the pump 5, the expansion mechanism 9, the compressor 10 and the blast fan 11a based on the set temperature which is set by the operating means 16 and based on temperature detected by the temperature sensors 12, 13 and 15.

The control device 14 has a function in which the hot water storing operation mode 141 is executed and stopped and a function in which temperature (set temperature) of hot water in the hot water storing operation mode 141 is set. By means of the operating means 16, a user instructs to execute and stop the hot water storing operation mode 141, and sets temperature (set temperature) of hot water heated by the water-refrigerant heat exchanger 1 in the hot water storing operation mode 141. The operating means 16 is provided with an operating unit (power supply switch) for turning the power supply ON/OFF. Further, the operating means 16 is provided with a display unit for displaying temperature such as set temperature and hot water storing temperature, and abnormality of the heat pump water heater 100.

It is possible to employ such a configuration that if it is detected that temperature detected by the hot water tank temperature detecting means 12 becomes lower than predetermined temperature (heating-starting temperature), the control device 14 starts the hot water storing operation mode 141, and if it is detected that temperature detected by the hot water tank temperature detecting means 12 becomes equal to or higher than the predetermined temperature (heating-starting temperature), the control device 14 stops the hot water storing operation mode 141. Similarly, the defrosting operation mode 142 may be started and completed by the control device 14 based on determination whether a frost formation condition is established.

Set temperature which is set by the operating means 16 can be set between predetermined lower limit temperatures and predetermined upper limit temperature. The lower limit temperature can be in a range of 25°C to 45°C, and the upper limit temperature can be in a range of 55°C to 75°C. The lower limit temperature and the upper limit temperature are determined based on operation pressure which is set as specification of the compressor 10, and based on a circulation flow rate of hot water which is set as specification of the pump 5.

Especially when CFC-based refrigerant is used as refrigerant, the lower limit temperature can be in a range of 25°C to 35°C, and the upper limit temperature can be in a range of 55°C to 65°C. In addition to the heat pump device 90, if there is provided heating means such as a heater capable of heating hot water to a temperature region higher than the heat pump device 90, the upper limit temperature may be set higher than 65°C. When CO₂ is used as refrigerant, the lower limit temperature can be in a range of 35°C to 45°C, and the upper limit temperature can be in a range of 65°C to 75°C.

A power supply of the operating means 16 may be turned ON when a user touches any of operation buttons of the operating means 16 or the display unit, and may be turned OFF when the operating means 16 is not operated form predetermined time, and the power supply is not especially limited.

When the operating means 16 instructs to start the hot water storing operation mode 141, or when the control device 14 determines that the hot water storing operation mode 141 should be started, the control device 14 activate the heat pump device 90 and the pump 5. According to this, refrigerant circulates through the refrigerant circuit 60 and hot water circulates through the heating circuit 70.

In the heat pump device 90, high temperature and high pressure refrigerant compressed by the compressor 10 flows into the refrigerant flow path of the water-refrigerant heat exchanger 1, and radiates heat to hot water which flows through the water flow path. According to this, high temperature hot water is produced. Refrigerant which flows out from the water-refrigerant heat exchanger 1 is decompressed by the expansion mechanism 9 and is brought into a low temperature and low pressure state, and the refrigerant flows into the evaporator 11. The refrigerant which flows into the evaporator 11 absorbs heat from air sent by the blast fan 11a, and evaporates. Thereafter, the refrigerant again flows into the compressor 10 and is compressed. Such operations are repeated and refrigerant circulates through the refrigerant circuit 60.

By operating the pump 5, hot water circulates through the heating circuit 70. Hot water in the lower portion of the hot water tank 2 flows into the water flow path of the water-refrigerant heat exchanger 1 through the going pipe 4 by the pump 5. The hot water which flows into the water flow path absorbs heat from refrigerant flowing through the refrigerant flow path, and becomes high temperature hot water. High temperature hot water which flows out from the water-refrigerant heat exchanger 1 flows through the returning pipe 3, and flows into the hot water tank 2 from the upper portion thereof. Hot water circulates through the heating circuit 70 in this manner, and high temperature hot water is stored in the hot water tank 2. The control device 14 controls the heat pump device 90 and the pump 5 such that temperature (heating temperature) of hot water which flows out from the heating circuit 70 becomes equal to set temperature. If a user opens the hot water supply terminal, hot water in the hot water tank 2 flows out from the hot water supply port 6a, and the hot water is supplied to the hot water supply terminal. According to this, hot water is supplied.

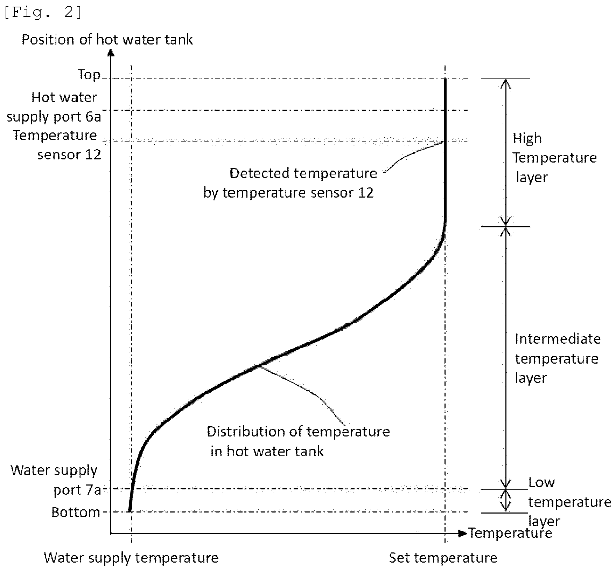

Water in the lower portion of the hot water tank 2 is heated by the hot water storing operation mode 141 and becomes high temperature hot water, and the hot water is stored from the upper portion of the hot water tank 2. At this time, temperature stratification is formed in the hot water tank 2. As shown in Fig. 2, temperature of the temperature stratification becomes higher upward. This temperature stratification is formed of a high temperature layer where hot water of set temperature which is set by the operating means 16 is distributed to predetermined height from a top of the hot water tank 2, a low temperature layer where hot water of water supply temperature supplied from the water supply pipe 7 is distributed to predetermined height from a bottom of the hot water tank 2, and an intermediate temperature layer formed between the high temperature layer and the low temperature layer and in which temperature of hot water is changed from target temperature to water supply temperature. Here, in the heat pump water heater 100, it is preferable that temperature of hot water distributed in the vicinity of a connected portions between the lower portion of the hot water tank 2 and the going pipe 4 is maintained at low temperature. According to this, it is possible to highly maintain the heating efficiency when the heat pump device 90 heats hot water.

If the hot water storing operation mode 141 is carried out under an operation condition that the outside air temperature is low, water (water drops) around the evaporator 11 through which low temperature and low pressure refrigerant flows is cooled, and frost is formed on a surface of the evaporator 11 in some cases. If the control device 14 determines that the frost forming condition on the evaporator 11 is established, the control device 14 executes the defrosting operation mode 142 for melting and removing the frost. For example, if temperature detected by the second temperature sensor (outside air temperature detecting means) 13 becomes lower than predetermined temperature, it is determined that the frost forming condition is established. Further, a temperature sensor (refrigerant temperature detecting means) (not shown) for detecting temperature of refrigerant flowing through the evaporator 11 is separately provided, and if temperature of refrigerant flowing through the evaporator 11 becomes lower than the predetermined temperature, it is determined that the frost forming condition is established. If the frost forming condition is established, the control device 14 starts the defrosting operation mode 142. It may be determined that the frost forming condition is established using both temperature detected by the second temperature sensor 13 and temperature of refrigerant flowing through the evaporator 11.

If the heat pump water heater 100 is not operated in a state where the outside air temperature is low, temperature of hot water staying in the heating circuit 70 is lowered and the hot water freezes in some cases. Since volume of water increases by about 1.1 times due to the freeze, if water staying in the heating circuit 70 freezes, a pipe configuring the heating circuit 70 and the water-refrigerant heat exchanger 1 are damaged in some cases.

If it is determined that a predetermined freezing-preventing condition is established, the control device 14 determines that there is a possibility that water staying in the heating circuit 70 freezes, the control device 14 executes the freezing-preventing operation mode 143 to circulate hot water through the heating circuit 70. Here, if the freezing-preventing operation mode 143 is executed, water of relatively low temperature distributed to the lower portion of the hot water tank 2 flows into the upper portion of the hot water tank 2. If the water of relatively low temperature flows into the upper portion of the hot water tank 2, temperature of hot water in the upper portion of the hot water tank 2 is lowered, and temperature of hot water supplied to the hot water supply terminal is also lowered. As a result, comfort of a user is deteriorated. To solve such a problem, it is possible to provide a bypass path which branches off from the returning pipe 3 and connected to heat exchanger hot water tank 2 at a location lower than the returning pipe 3, but this is not preferable because the hot water tank unit 80 is increased in size and costs. Therefore, it is necessary to highly maintain comfort of a user without providing the bypass path.

The present invention has been accomplished based on this problem, and in the heat pump water heater 100 in which temperature (set temperature) of hot water produced in the hot water storing operation mode 141 is set by the operating means 16, it is an object of the invention to highly maintain comfort of a user even if the freezing-preventing operation mode 143 to circulate and return water in the lower portion of the hot water tank 2 through and to the upper portion of the hot water tank 2 is carried out.

Hence, the heat pump water heater 100 of the invention changes temperature of hot water which flows out from the heat pump device 90 during the freezing-preventing operation mode 143 in accordance with the ON/OFF state of the operating means 16. That is, the heat pump device 90 is stopped or operated during the freezing-preventing operation mode 143 to change the temperature of hot water which flows out from the heat pump device 90. When the heat pump device 90 is operated, a target value of temperature (heating temperature) of hot water which is heated by the heat pump device 90 (water-refrigerant heat exchanger 1) is changed.

Here, when a user is using the heat pump water heater 100 or when the user has a will to use the heat pump water heater 100, the operating means 16 is used. Hence, it is determined whether a user will use the heat pump water heater 100 in accordance with the ON/OFF state of the operating means 16, and heating temperature in the freezing-preventing operation mode 143 is changed.

At this time, for highly maintaining comfort of a user, it is preferable that the heating temperature is changed in a range equal to or higher than a lower limit value (lower limit temperature) of temperature which is set by the operating means 16. According to this, it is possible to keep temperature of hot water in the upper portion of the hot water tank 2 at a value equal to or higher than the lower limit temperature. As a result, since it is possible to keep the temperature of hot water supplied to the hot water supply terminal at the value equal to or higher than the lower limit temperature, it is possible to maintain comfort of a user.

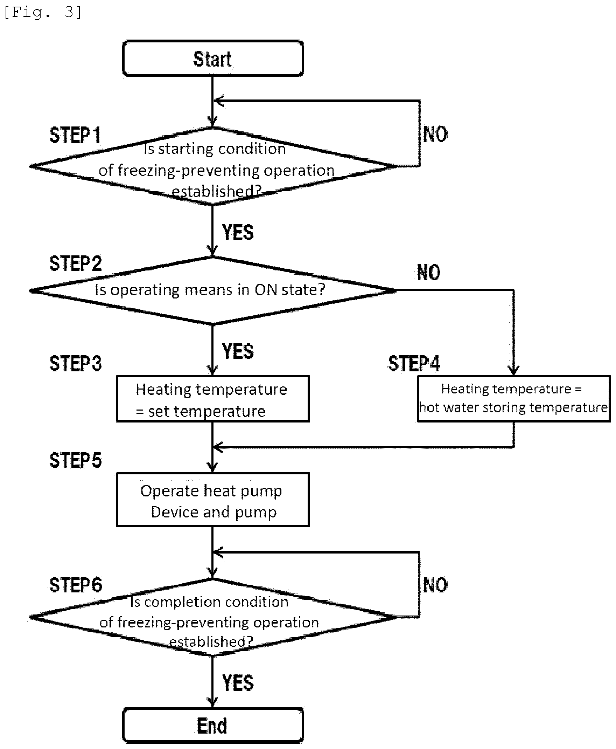

Fig. 3 shows a control flowchart of the freezing-preventing operation mode 143 of the heat pump water heater 100. The freezing-preventing operation mode 143 will be described based on this flowchart.

First, the control device 14 determines, by means of the freezing-preventing operation start-determining means 143a, whether a starting condition of the freezing-preventing operation mode 143 is established (STEP 1). To make this determination, it is possible to use outside air temperature detecting means 13. More specifically, when temperature detected by the second temperature sensor (outside air temperature detecting means) 13 is lower than second reference temperature (i.e., 0°C), it is determined that the starting condition of the freezing-preventing operation mode 143 is established.

To make the determination of the starting condition of the freezing-preventing operation mode 143, another temperature stratification may be used. For example, when temperature detected by the third temperature sensor (outlet temperature detecting means) 15 provided in the heating circuit 70 is lower than third reference temperature (e.g., 0°C), it may determine that the starting condition of the freezing-preventing operation mode 143 is established. Another fourth temperature sensor (inlet temperature detecting means) (not shown) may be provided in the heating circuit 70 upstream of the water-refrigerant heat exchanger 1, temperature of water (inlet temperature) flowing into the water-refrigerant heat exchanger 1 may be detected by the inlet temperature detecting means, and if the detected temperature is lower than fourth reference temperature (e.g., 0°C), it may determine that the starting condition of the freezing-preventing operation mode 143 is established. Different values may be used for the plurality of reference temperature. Further, when temperature detected by the plurality of temperature sensors 12, 13 and 15 is lower than a refrigerant temperature, it may determine that the starting condition of the freezing-preventing operation mode 143 is established.

Instead of using the temperature detected by the temperature sensors 12, 13 and 15, it is also possible to employ such a configuration that the timer 42 measures time elapsed after the last hot water storing operation mode 141, and it is determined that the starting condition of the freezing-preventing operation mode 143 is established in accordance with this elapsed time. That is, a fact that time elapsed after the last hot water storing operation mode 141 is equal to or longer than predetermined time may be used as the starting condition of the freezing-preventing operation mode 143. The plurality of temperature sensors 12, 13 and 15 and elapsed time can be appropriately combined together and can be used. That is, a fact that temperature detected by any of the temperature sensors 12, 13 and 15 is equal to or lower than reference temperature and time elapsed after the last hot water storing operation mode 141 is equal to or longer than set time can be used as the starting condition of the freezing-preventing operation mode 143.

If the freezing-preventing operation start-determining means 143a determines that the starting condition of the freezing-preventing operation mode 143 is not established (NO in STEP 1), the control device 14 continues the determination of the starting condition of the freezing-preventing operation mode 143. If the control device 14 determines, by means of the freezing-preventing operation start-determining means 143a, that the starting condition of the freezing-preventing operation mode 143 is established on the other hand (YES in STEP 1), the procedure proceeds to STEP 2.

The control device 14 determines, by means of the operation state-determining means 143b, that the operating means 16 is in the ON state or the OFF state (STEP 2). The ON state of the operating means 16 is a state that the power supply of the operating means 16 is ON as viewed from a user. For example, when the operating means 16 is provided with a display unit which displays set temperature and the hot water storing terminal, if set temperature is displayed on the display unit, the operating means 16 is in the ON state, and if the set temperature is not displayed on the display unit, the operating means 16 is in the OFF state. Further, it is also possible to determine whether the operating means 16 is in the ON state or the OFF state based on the presence or absence of light of a backlight of the display unit for example. In this case, if the backlight lights, it can be determined that the operating means 16 is in the ON state, and if the backlight does not light, it can be determined that the operating means 16 is in the OFF state.

If the operation state-determining means 143b determines that the operating means 16 is in the ON state (YES in STEP 2), the procedure proceeds to STEP 3. If the operation state-determining means 143b determines that the operating means 16 is in the OFF state (NO in STEP 2) on the other hand, the procedure proceeds to STEP 4.

If the control device 14 determines, by means of the operation state-determining means 143b, that the operating means 16 is in the ON state, in the freezing-preventing operation mode 143, the heating temperature-determining means 143c determines temperature (heating temperature) of hot water flowing out from the heat pump device 90 (water-refrigerant heat exchanger 1) as set temperature which is already set by the operating means 16 (STEP 3). That is, if the operating means 16 is in the ON state and a user has a will to use the heat pump water heater 100, heating temperature in the freezing-preventing operation mode 143 is determined as set temperature which is already set by the operating means 16. According to this, it is possible to produce hot water of temperature which is desired by a user, and to carry out the freezing-preventing operation mode 143. Therefore, it is possible to highly maintain comfort of the user.

If the control device 14 determines, by means of the operation state-determining means 143b, that the operating means 16 is in the OFF state on the other hand, in the freezing-preventing operation mode 143, the heating temperature-determining means 143c determines temperature (heating temperature) of hot water flowing out from the heat pump device 90 (water-refrigerant heat exchanger 1) as hot water storing temperature (STEP 4). The hot water storing temperature can be detected by the first temperature sensor (hot water tank temperature detecting means) 12. If the operating means 16 is in the OFF state, it can be determined that a user does not have a will to use the heat pump water heater 100. However, it is also possible to assume a case where the user will use the heat pump water heater 100 immediately after the freezing-preventing operation mode 143 is executed. Therefore, to prevent a heat amount of the upper portion of the hot water tank 2 when the freezing-preventing operation mode 143 is executed from reducing, heating temperature in the freezing-preventing operation mode 143 is set as the hot water storing temperature.

It is preferable that the hot water storing temperature at this time is the highest value of temperature of hot water in the hot water tank 2. Therefore, when the plurality of temperature sensors 12, 13 and 15 are provided in the height direction of the hot water tank 2 to configure the hot water tank temperature detecting means, it is preferable that the control device 14 sets temperature detected by the highest one of the plurality of temperature sensors 12, 13 and 15 as the heating temperature.

The control device 14 sets the heating temperature in STEP 3 or STEP 4 and then, the procedure proceeds to STEP 5. In STEP 5, the control device 14 activates the heat pump device 90 and the pump 5, and carries out the following operation. According to this, refrigerant circulates through the refrigerant circuit 60, and hot water circulates through the heating circuit 70. When temperature (outlet temperature) of hot water which flows out from the water-refrigerant heat exchanger 1 is equal to or higher than temperature set in STEP 3 or STEP 4, it is unnecessary to activate the heat pump device 90.

The control device 14 controls the compressor 10, the expansion mechanism 9, the blast fan 11a and the pump 5 such that temperature of hot water which is flows out from the water-refrigerant heat exchanger 1 becomes equal to temperature set in STEP 3 or STEP 4. More specifically, the control device 14 controls the compressor 10, the expansion mechanism 9, the blast fan 11a and the pump 5 such that temperature detected by the third temperature sensor (outlet temperature detecting means) 15 becomes equal to temperature set in STEP 3 or STEP 4. For example, the control device 14 controls the number of rotations of the compressor 10, a valve opening degree of the expansion mechanism 9, and the number of rotations of the blast fan 11a such that temperature (discharge temperature) of refrigerant discharged from the compressor 10 becomes equal to temperature higher than temperature set in STEP 3 or STEP 4 by predetermined temperature (e.g., 10°C) . At the same time, the control device 14 adjusts a circulation amount of hot water by the pump 5 such that temperature detected by outlet temperature detecting means 15 becomes equal to temperature set in STEP 3 or STEP 4.

After the operation in STEP 5 is started, the control device 14 determines, by means of the freezing-preventing operation completion-determining means 143d, whether a completion condition of the freezing-preventing operation mode 143 is established (STEP 6). To make this determination, it is possible to use at least one of temperature detected by the second temperature sensor (outside air temperature detecting means) 13, temperature detected by the fourth temperature sensor (inlet temperature detecting means), and time (as measured by the timer 42) elapsed after the freezing-preventing operation mode 143 is started. That is, when the detected temperature sets are is equal to or higher than the reference temperature, or when time elapsed after the freezing-preventing operation mode 143 is started exceeds predetermined time, it is determined that the completion condition of the freezing-preventing operation mode 143 is established. It is possible to use, singularly or in combination, the temperature detected by the second temperature sensor (outside air temperature detecting means) 13, temperature detected by the fourth temperature sensor (inlet temperature detecting means), and time (as measured by the timer 42) elapsed after the freezing-preventing operation mode 143 is started.

If the freezing-preventing operation completion-determining means 143d determines that that the completion condition of the freezing-preventing operation mode 143 is established (YES in STEP 6), to complete the freezing-preventing operation mode 143, the control device 14 stops the operations of the heat pump device 90 and the pump 5. If the freezing-preventing operation completion-determining means 143d determines that the completion condition of the freezing-preventing operation mode 143 is not established (NO in STEP 6), the control device 14 continues the freezing-preventing operation mode 143.

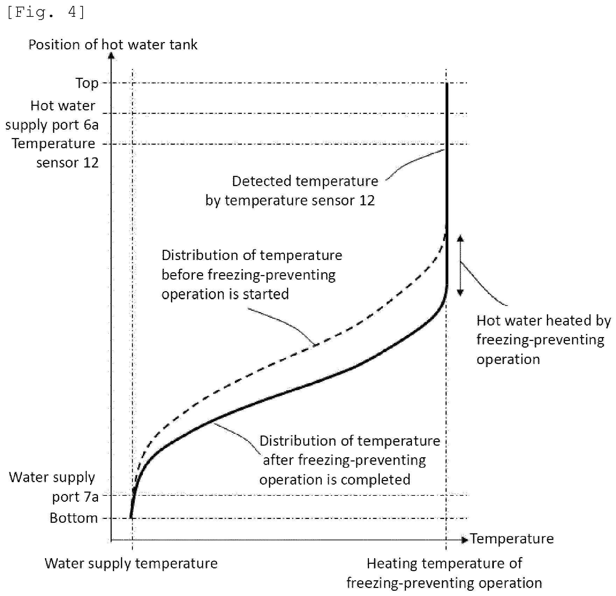

Fig. 4 shows a temperature distribution of hot water in the hot water tank 2 when the freezing-preventing operation mode 143 is carried out and the heating temperature is set to the hot water storing temperature in STEP 4. Dotted lines shown in Fig. 2 show a temperature distribution of hot water in the hot water tank 2 before the freezing-preventing operation mode 143 is started, and solid lines show a temperature distribution of hot water in the hot water tank 2 after the freezing-preventing operation mode is completed.

As shown in Fig. 4, after the freezing-preventing operation mode 143 is completed, the high temperature layer in the hot water tank 2 increases. However, the high temperature layer in the hot water tank 2 only increases, and temperature of hot water in the vicinity of the hot water supply port 6a does not vary. Therefore, temperature of hot water which flows out from the hot water supply port 6a also does not vary and temperature of hot water supplied to the hot water supply terminal also does not vary and therefore, it is possible to highly maintain comfort of a user.

If a high priority is put on the energy saving performance, a target value of the heating temperature which is set in STEP 4 may be set to the lower limit temperature. Generally, the lower the target value of the heating temperature is, the more excellent the heating efficiency of the heat pump device 90 becomes. Hence, if the target value of the heating temperature which is set in STEP 4 is set to the lower limit temperature, it is possible to reduce an electric power using amount in the freezing-preventing operation mode 143, and it is possible to provide a heat pump water heater 100 having excellent energy saving performance.

When a high priority is put on the energy saving performance of the heat pump water heater 100 and the plurality of temperature sensors 12, 13 and 15 are provided in the height direction of the hot water tank 2 to configure the hot water tank temperature detecting means 12, it is possible to use, as the hot water storing temperature in STEP 4, it is also possible to use temperature detected by one of the temperature sensors provided at the lowest position in the height direction of the hot water tank 2. Generally, the lower the target value of the heating temperature is, the more excellent the heating efficiency of the heat pump device 90 becomes. Hence, if temperature detected by one of the temperature sensors which is provided at the lowest position of the hot water tank temperature detecting means 12 is set as the hot water storing temperature in STEP 4, it is possible to reduce an electric power using amount in the freezing-preventing operation mode 143, and to realize a heat pump water heater 100 having excellent energy saving performance.

Even if a high priority is put on the energy saving performance, if the hot water storing temperature is lower than the lower limit temperature, it is preferable to set the target value of the heating temperature which is set in STEP 4 to a value which is equal to or higher than the lower limit temperature.

When the hot water storing temperature is equal to or higher than the lower limit temperature, hot water of temperature which is equal to or higher than the lower limit temperature is stored in the hot water tank 2. If the pump 5 is operated in this state, since hot water of temperature which is equal to or higher than the lower limit temperature circulates through the heating circuit 70, it is possible to heat an interior of the heating circuit 70 to predetermined temperature, and there is an effect to prevent the freeze.

Hence, when temperature of hot water flowing through the heating circuit 70 is higher than the target value of heating temperature determined in STEP 3 or STEP 4, it is unnecessary to activate the heat pump device 90.

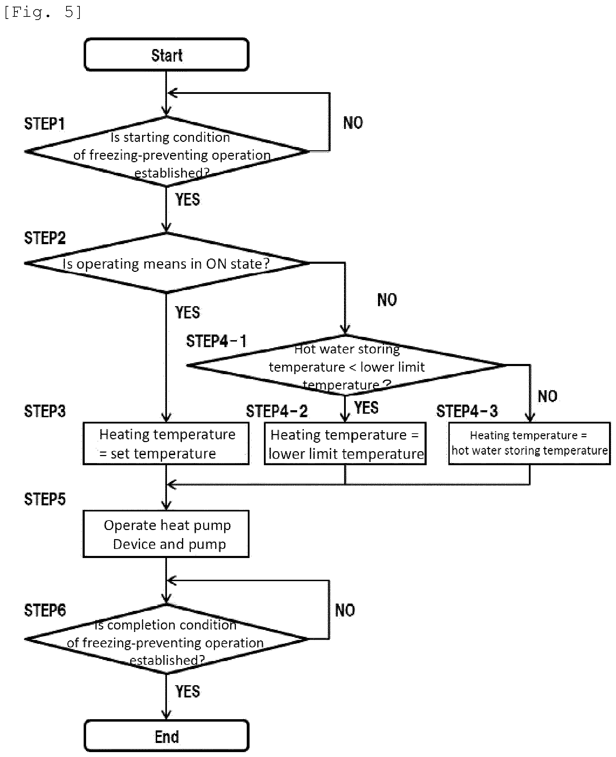

As shown in a flowchart in Fig. 5, when the control device 14 executes the freezing-preventing operation mode 143 in a state where the operating means 16 is in the OFF state, a target value of temperature (heating temperature) of hot water which is heated by the water-refrigerant heat exchanger 1 in the freezing-preventing operation mode 143 may further be changed in accordance with high or low of the hot water storing temperature with respect to the lower limit temperature.

When the control device 14 executes the freezing-preventing operation mode 143 in the state where the operating means 16 is in the OFF state, the control device 14 compares the hot water storing temperature and the lower limit temperature with each other (STEP 4-1). If the hot water storing temperature is lower than the lower limit temperature (YES in STEP 4-1), the procedure proceeds to STEP 4-2, and the control device 14 sets the target value of heating temperature to the lower limit temperature. If the hot water storing temperature is equal to or higher than the lower limit temperature (NO in STEP 4-1), procedure proceeds to STEP 4-3, and the control device 14 sets the target value of heating temperature to the hot water storing temperature. That is, higher one of the lower limit temperature and the hot water storing temperature is set as the target value of the heating temperature in the freezing-preventing operation mode 143.

When the operating means 16 is in the OFF state, it can be determined that a user does not have a will to use the heat pump water heater 100. However, it is also possible to assume a case where the user will use the heat pump water heater 100 immediately after the freezing-preventing operation mode 143 is executed. Therefore, when the freezing-preventing operation mode 143 is executed, higher one of the lower limit temperature and the hot water storing temperature is set as the target value of the heating temperature. According to this, it is possible to restrain a heat amount of the upper portion of the hot water tank 2 from reducing, and temperature of hot water to be supplied is maintained at high temperature. As a result, it is possible to highly maintain comfort of the user.

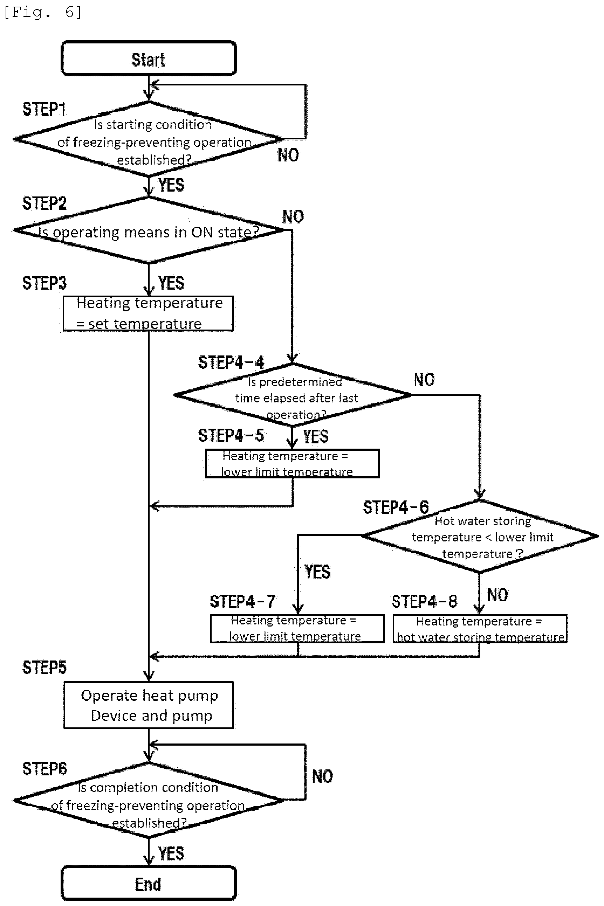

As shown in Fig. 6, when the freezing-preventing operation mode 143 is executed in the state where the operating means 16 is in the OFF state, the target value of the heating temperature may be selected using time elapsed from the last operation. That is, it is possible to estimate whether a user will use the heat pump water heater 100 using time elapsed from the last operation, and to select the target value of heating temperature. Here, the last operation means the operation mode or the freezing-preventing operation mode 143 carried out in the latest.

More specifically, when the freezing-preventing operation mode 143 is carried out in the state where the operating means 16 is in the OFF state, the control device 14 determines whether time elapsed from the last operation which is recorded in the timer 42 is equal to or longer than predetermined time (STEP 4-4). If predetermined time is elapsed from the last operation (YES in STEP 4-4), procedure proceeds to STEP 4-5, and the lower limit temperature is set as a target value of heating temperature.

If the predetermined time is not elapsed from the last operation (NO in STEP 4-4) on the other hand, procedure proceeds to STEP 4-6, the hot water storing temperature and the lower limit temperature are compared with each other, and higher one of them is set as the target value of heating temperature (STEP 4-7, STEP 4-8). Using time elapsed from the last operation, it is estimated whether a user will use the heat pump water heater 100 and whether the heat pump water heater 100 is not used in this time zone, and the target value of heating temperature in the freezing-preventing operation mode 143 is changed. As a result, it is possible to provide a heat pump water heater 100 capable of highly maintaining comfort of the user.

At this time, in STEP 4-4, the target value of heating temperature may be changed using the current time which is determined by the time determining unit 41 of the control device 14. That is, if the current time is day-time zome (e.g., time zone from 10:00 to 16:00) and midnight-time zone (e.g., time zone from 23:00 to 7:00 of next day) when frequency in use of the heat pump water heater 100 is low, lower one of the heating temperature and the hot water storing temperature can be set as the target value of heating temperature. On the other hand, if the current time is time zome (e.g., one of time zone from 7:00 to 10:00 and time zone from 16:00 to 23:00) when frequency in use of the heat pump water heater 100 is high, higher one of the heating temperature and the hot water storing temperature can be set as the target value of heating temperature.

As described above, according to the heat pump water heater 100 of the present invention, in the freezing-preventing operation mode 143, temperature of hot water which flows out from the heat pump device 90 is changed in accordance with the ON/OFF state of the operating means 16. When hot water is heated by the heat pump device 90 in the freezing-preventing operation mode 143, temperature (heating temperature) of hot water heated by the water-refrigerant heat exchanger 1 is changed in accordance with the ON/OFF state of the operating means 16.

That is, it is estimated whether a user has a will to use the heat pump water heater 100 based on the ON/OFF state of the operating means 16, and temperature of hot water which flows out from the heat pump device 90 (water-refrigerant heat exchanger 1) is changed in the freezing-preventing operation mode 143. At this time, the temperature of hot water which flows out from the heat pump device 90 is changed in the range which is equal to or higher than the lower limit temperature which can be set by the operating means 16. As a result, it is possible to provide a heat pump water heater 100 capable of highly maintaining comfort of the user.

### [INDUSTRIAL APPLICABILITY]

According to the present invention, since it is possible to provide a heat pump water heater capable of highly maintaining comfort of a user, the heat pump water heater can be used as a domestic water heater and a professional-use water heater.

### [EXPLANATION OF SYMBOLS]

1 water-refrigerant heat exchanger (radiator)
2 hot water tank
3 returning pipe
4 going pipe
5 pump
6 hot water supply pipe
6a hot water supply port
7 water supply pipe
7a water supply port
9 expansion mechanism
10 compressor
11 evaporator
12 first temperature sensor (hot water tank temperature detecting means)
13 second temperature sensor (outside air temperature detecting means)
14 control device
15 third temperature sensor (outlet temperature detecting means)
16 operating means

## Claims

1. A heat pump water heater (100) comprising:
a hot water tank (2) in which hot water is stored;
hot water tank temperature detecting means (12) for detecting temperature of the hot water in the hot water tank (2);
a heat pump device (90) for heating the hot water;
a heating circuit (70) in which the heat pump device (90) is placed at a halfway portion of the heating circuit (70) and which returns the hot water sent from a lower portion of the hot water tank (2) to an upper portion of the hot water tank (2);
a pump (5) provided in the heating circuit between the lower portion of the hot water tank (2) and the heat pump device (90);
operating means (16) for setting a temperature of the hot water heated by the heat pump device (90) between predetermined lower limit temperature and predetermined upper limit temperature; and
a control device (14) for executing at least a hot water storing operation mode (141) in which the hot water is heated by the heat pump device (90) to a set temperature which is set by the operating means (16), and a freezing-preventing operation mode (143) in which the hot water is made to flow to the heating circuit (70) under a predetermined freezing-preventing condition, wherein
the control device (14) includes
freezing-preventing operation start-determining means (143a) for determining a starting condition of the freezing-preventing operation mode (143), and
heating temperature-determining means (143c) for determining heating temperature of the hot water in the freezing-preventing operation mode (143),
**characterized in that** the control device further includes operation state-determining means (143b) for determining whether the operating means (16) is in an ON state or an OFF state, and
the heating temperature determined by the heating temperature-determining means (143c) is changed based on determination of the operation state-determining means (143b).

2. The heat pump water heater (100) according to claim 1, wherein when the operation state-determining means (143b) determines that the operating means (16) is in the ON state, the heating temperature determined by the heating temperature-determining means (143c) is set to the set temperature which is set by the operating means (16).

3. The heat pump water heater (100) according to claim 1, wherein the heating temperature determined by the heating temperature-determining means (143c) is set equal to or higher than the lower limit temperature which is set by the operating means (16).

4. The heat pump water heater (100) according to claim 1, wherein when the operation state-determining means (143b) determines that the operating means (16) is in the OFF state, the heating temperature determined by the heating temperature-determining means (143c) is set to the hot water storing temperature which is detected by the hot water tank temperature detecting means (12).

5. The heat pump water heater (100) according to claim 1 or 4, wherein when the operation state-determining means (143b) determines that the operating means is in the OFF state, the heating temperature determined by the heating temperature-determining means (143c) is set to the lower limit temperature which is set by the operating means (16).

## Patentansprüche

1. Wärmepumpenwassererhitzer (100), umfassend:
einen Warmwasserbehälter (2), in dem warmes Wasser gespeichert wird;
eine Warmwasserbehälter-Temperaturerfassungseinrichtung (12) zum Erfassen der Temperatur des warmen Wassers in dem Warmwasserbehälter (2);
eine Wärmepumpenvorrichtung (90) zum Erwärmen des warmen Wassers;
einen Heizkreis (70), in den die Wärmepumpenvorrichtung (90) an eine Stelle auf halbem Wege des Heizkreises (70) gesetzt ist, und der das warme Wasser von einem unteren Bereich des Warmwasserbehälters (2) zu einem oberen Bereich des Warmwasserbehälters (2) zurückführt;
eine Pumpe (5), vorgesehen im Heizkreis zwischen dem unteren Bereich des Warmwasserbehälters (2) und der Wärmepumpenvorrichtung (90);
eine Bedienungseinrichtung (16) zum Einstellen einer Temperatur des durch die Wärmepumpenvorrichtung (90) erwärmten warmen Wassers zwischen einer vorgegebenen unteren Grenztemperatur und einer vorgegebenen oberen Grenztemperatur; und
eine Steuerungsvorrichtung (14) zum Ausführen mindestens einer Warmwasserspeicherungs-Betriebsart (141), in der das warme Wasser durch die Wärmepumpenvorrichtung (90) erwärmt wird, um die Temperatur einzustellen, die durch die Bedienungseinrichtung (16) eingestellt ist, und einer Frostschutz-Betriebsart (143), in der das warme Wasser unter einer vorgegebenen Frostschutzbedingung veranlasst wird, zum Heizkreis (70) zu fließen, wobei
die Steuerungsvorrichtung (14) enthält:
eine Frostschutzbetriebs-Startbestimmungseinrichtung (143a) zum Bestimmen einer Startbedingung der Frostschutz-Betriebsart (143), und
eine Heiztemperatur-Bestimmungseinrichtung (143c) zum Bestimmen der Heiztemperatur des warmen Wassers in der Frostschutz-Betriebsart (143),
**dadurch gekennzeichnet, dass** die Steuerungsvorrichtung weiter eine Betriebszustands-Bestimmungseinrichtung (143b) zum Bestimmen enthält, ob sich die Bedienungseinrichtung (16) in einem Ein-Zustand oder in einem Aus-Zustand befindet, und
die durch die Heiztemperatur-Bestimmungseinrichtung (143c) bestimmte Heiztemperatur auf Grundlage der Bestimmung der Betriebszustands-Bestimmungseinrichtung (143b) geändert wird.

2. Wärmepumpenwassererhitzer (100) nach Anspruch 1, wobei, wenn die Betriebszustands-Bestimmungseinrichtung (143b) bestimmt, dass sich die Bedienungseinrichtung (16) in dem Ein-Zustand befindet, die durch die Heiztemperatur-Bestimmungseinrichtung (143c) bestimmte Heiztemperatur auf die Solltemperatur eingestellt wird, die durch die Bedienungseinrichtung (16) eingestellt ist.

3. Wärmepumpenwassererhitzer (100) nach Anspruch 1, wobei die durch die Heiztemperatur-Bestimmungseinrichtung (143c) bestimmte Heiztemperatur auf oder höher als die untere Grenztemperatur eingestellt wird, die durch die Bedienungseinrichtung (16) eingestellt ist.

4. Wärmepumpenwassererhitzer (100) nach Anspruch 1, wobei, wenn die Betriebszustands-Bestimmungseinrichtung (143b) bestimmt, dass sich die Bedienungseinrichtung (16) in dem Aus-Zustand befindet, die durch die Heiztemperatur-Bestimmungseinrichtung (143c) bestimmte Heiztemperatur auf die Warmwasser-Speichertemperatur eingestellt wird, die durch die Warmwasserbehälter-Temperaturerfassungseinrichtung (12) erfasst ist.

5. Wärmepumpenwassererhitzer (100) nach Anspruch 1 oder 4, wobei, wenn die Betriebszustands-Bestimmungseinrichtung (143b) bestimmt, dass sich die Bedienungseinrichtung in dem Aus-Zustand befindet, die durch die Heiztemperatur-Bestimmungseinrichtung (143c) bestimmte Heiztemperatur auf die untere Grenztemperatur eingestellt wird, die durch die Bedienungseinrichtung (16) eingestellt ist.

## Revendications

1. Chauffe-eau à pompe à chaleur (100), comprenant:
un réservoir (2) d'eau chaude dans lequel est stockée de l'eau chaude;
un moyen de détection (12) de la température du réservoir d'eau chaude pour détecter la température de l'eau chaude dans le réservoir (2) d'eau chaude;
un dispositif de pompe à chaleur (90) pour chauffer l'eau chaude;
un circuit de chauffage (70) dans lequel est disposé le dispositif (90) à pompe à chaleur, à une position à la moitié du circuit de chauffage (70), et qui refoule l'eau chaude renvoyée depuis une partie inférieure du réservoir (2) d'eau chaude vers une partie supérieure du réservoir (2) d'eau chaude;
une pompe (5) fournie dans le circuit de chauffage, entre la partie inférieure du réservoir (2) d'eau chaude et le dispositif (90) à pompe à chaleur;
un moyen d'exploitation (16) pour régler une température de l'eau chaude chauffée par le dispositif (90) à pompe à chaleur entre une température limite inférieure prédéterminée et une température limite supérieure prédéterminée; et
un dispositif de commande (14) pour exécuter au moins un mode fonctionnement (141) de stockage d'eau chaude, dans lequel l'eau chaude est chauffée par le dispositif (90) à pompe à chaleur à la température de consigne qui est réglée par le moyen d'exploitation (16), et un mode de fonctionnement (143) de prévention du givrage, dans lequel l'eau chaude est amenée à circuler vers le circuit de chauffage (70) dans une condition de prévention de givrage prédéterminée, dans lequel le dispositif de commande (14) comprend
un moyen (143a) de détermination du démarrage du mode de fonctionnement de prévention du givrage pour déterminer une condition de démarrage du mode de fonctionnement (143) de prévention du givrage, et
un moyen (143c) de détermination de la température de chauffage pour déterminer la température de chauffage de l'eau chaude dans le mode de fonctionnement (143) de prévention du givrage,
**caractérisé en ce que** le dispositif de commande comporte en outre un moyen de détermination (143b) de l'état de fonctionnement pour déterminer si le moyen d'exploitation (16) est dans un état de marche ON ou dans un état d'arrêt OFF, et
la température de chauffage déterminée par le moyen de détermination (143c) de la température de chauffage est modifiée sur la base de la détermination effectuée par le moyen de détermination (143b) de l'état de fonctionnement.

2. Chauffe-eau à pompe à chaleur (100) selon la revendication 1, dans lequel, lorsque le moyen de détermination (143b) de l'état de fonctionnement détermine que le moyen d'exploitation (16) est dans l'état de marche ON, la température de chauffage déterminée par le moyen de détermination (143c) de la température de chauffage est réglée sur la température réglée par le moyen d'exploitation (16).

3. Chauffe-eau à pompe à chaleur (100) selon la revendication 1, dans lequel la température de chauffage déterminée par le moyen de détermination (143c) de la température de chauffage est réglée à une valeur égale ou supérieure à la température limite inférieure qui est réglée par le moyen d'exploitation (16).

4. Chauffe-eau à pompe à chaleur (100) selon la revendication 1, dans lequel, lorsque le moyen de détermination (143b) de l'état de fonctionnement détermine que le moyen d'exploitation (16) est dans l'état d'arrêt OFF, la température de chauffage déterminée par le moyen de détermination (143c) de la température de chauffage est réglée sur la température de stockage de l'eau chaude qui est détectée par le moyen de détection (12) de la température du réservoir d'eau chaude.

5. Chauffe-eau à pompe à chaleur (100) selon la revendication 1 ou 4, dans lequel, lorsque le moyen de détermination (143b) de l'état de fonctionnement détermine que le moyen d'exploitation est dans l'état d'arrêt OFF, la température de chauffage déterminée par le moyen de détermination (143c) de la température de chauffage est réglée sur la température limite inférieure qui est réglée par le moyen d'exploitation (16).
